# EUROPÄISCHE PATENTSCHRIFT

(11) **EP 1 025 346 B1**
(45) Veröffentlichungstag und Bekanntmachung des Hinweises auf die Patenterteilung: **23.06.2004**
(21) Anmeldenummer: 98955472.0
(22) Anmeldetag: 16.10.1998
(51) Int. Cl.: F01N 3/20, B01D 53/94

(54) **VERFAHREN UND VORRICHTUNG ZUR REGELUNG DES TEMPERATURBEREICHES EINES NOx-SPEICHERS IN EINER ABGASANLAGE EINES VERBRENNUNGSMOTORS**
METHOD AND DEVICE FOR CONTROLLING THE TEMPERATURE RANGE OF AN NOx ACCUMULATOR IN THE EXHAUST SYSTEM OF A COMBUSTION ENGINE
PROCEDE ET DISPOSITIF POUR LA REGULATION DE LA PLAGE DE TEMPERATURE D'UN ACCUMULATEUR DE NOx DANS LE SYSTEME D'ECHAPPEMENT D'UN MOTEUR A COMBUSTION INTERNE

(30) Priorität: 22.10.1997 DE 19746658
(43) Veröffentlichungstag der Anmeldung: 09.08.2000
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE); PFALZGRAF, Bernhard, D-85051 Ingolstadt (DE)
(74) Vertreter: Kahlhöfer, Hermann, Dipl.-Phys.
(86) Internationale Anmeldenummer: PCT/EP1998/006584
(87) Internationale Veröffentlichungsnummer: WO 1999/020876

(56) Entgegenhaltungen:
- EP-A- 0 415 128
- WO-A-96/29141
- DE-A- 2 046 180
- US-A- 5 155 994
- US-A- 5 474 745
- PATENT ABSTRACTS OF JAPAN vol. 018, no. 671 (M-1726), 19. Dezember 1994 & JP 06 264822 A (KUBOTA CORP), 20. September 1994

## Beschreibung

Die vorliegende Erfindung betrifft ein Verfahren und eine Vorrichtung zur Regelung des Temperaturbereiches eines NOx-Speichers in einer Abgasanlage zum Reinigen eines Abgasstromes einer Verbrennungskraftmaschine. Die Erfindung ist insbesondere bei der Reinigung eines Abgasstromes eines Diesel- oder eines Magermotors zum Abreinigen von im Abgas vorhandenen Stoffen wie unverbrannten Kohlenwasserstoffen, Kohlenmonoxid und Stickoxiden einsetzbar.

Ein zunehmendes Umweltbewußtsein und eine dieses Umweltbewußtsein reflektierende strenger werdende Abgasgesetzgebung erfordern eine noch stärkere Reduzierung von Abgaskomponenten, welche im Abgas einer Verbrennungskraftmaschine enthalten und als schädlich eingestuft sind. Üblicherweise wird in gegenwärtigen Kraftfahrzeugen ein Dreiwege-Katalysator eingesetzt, mittels welchem Kohlenmonoxid (CO), unverbrannte Kohlenwasserstoffe (HC) und Stickstoffoxide (NOx) in unschädliche Bestandteile umgesetzt werden.

Aus der DE 20 461 80 A ist ein Verfahren zur katalytischen Umsetzung von Kohlenmonoxid, Kohlenwasserstoffen und Stickoxiden aus dem Abgas von Verbrennungsmotoren von Kraftfahrzeugen bekannt, wobei das Verfahren eine zweistufige katalytische Umsetzung umfasst, wobei der Abgasstrom nach der ersten Stufe der katalytischen Behandlung mit Ammoniak behandelt wird. Um eine Maximierung der Umsetzung von Stickoxiden in der zweiten Katalysatorstufe zu erreichen, wird das Abgas vor Einleiten in diese gekühlt.

Aus der US 5,474,745 ist eine Vorrichtung und ein Verfahren zur Reduktion von Stickoxiden mit Hilfe eines DeNOx-Katalysators bekannt, welcher auf der Zusetzung von Reduktionsmittel basiert. Um eine optimale Umsetzung des NOx zu erreichen, wird der Betriebstemperaturbereich des Katalysators in Abhängigkeit vom verwendeten Reduktionsmittel geregelt

Aus der WO 96/29141 ist ein Verfahren und eine Vorrichtung zur katalytischen Umsetzung von im Abgas enthaltenen Schadstoffen bekannt, die eine Kohlenwasserstofffalle aufweisen.

In der EP 0 298 240 B1 ist beschrieben, daß bei den bekannten Abgaskatalysatoranlagen über die Ermittlung des Restsauerstoffgehaltes im Abgas mittels einer Sauerstoff-Sonde, über die Ermittlung des Temperaturprofils am Katalysator und über die Ermittlung der bei der katalytischen Reaktion freiwerdenden Wärmemenge auf das Abgasverhalten der Verbrennungskraftmaschine geschlossen werden kann.

Beim Betrieb und vor allem während der Kaltstartphase fallen bei einer Verbrennungskraftmaschine Schadstoffe an. Daher ist es erforderlich, Katalysatoren im Abgasstrang einer Verbrennungskraftmaschine vorzusehen. Dies ist beispielsweise aus der EP 0 628 134 B1 bekannt. Des weiteren ist aus der EP 0 485 179 bekannt, Adsorber zur Speicherung von während der Kaltstartphase anfallenden unverbrannten Kohlenwasserstoffen zu verwenden, die bei betriebsbereitem nachgeschaltetem Katalysator wieder abgegeben werden.

Bei stationären Verbrennungskraftmaschinen gilt in Deutschland die TA-Luft. Die Verringerung der Stickoxidemissionen aus dem Abgas von Verbrennungskraftmaschinen wird bei stationären Anlagen häufig mittels Harnstoff realisiert.

Bei Verbrennungskraftmaschinen für Kraftfahrzeuge ist dies nicht möglich, und zwar unter anderem wegen des dafür mitzuführenden Tanks und wegen dessen Gewichts. Insbesondere bei Nutzfahrzeugen ist es bekannt, eine Abgasrückführung mit rückgekühlten Abgasen durchzuführen. Auch ist es bekannt, durch Wassereinspritzung die NOx-Emissionen zu reduzieren. Des weiteren ist es bekannt, die NOx-Emissionen dadurch zu verringern, daß diese zunächst in einem NOx-Speicher zwischengespeichert werden, aus welchem diese dann durch gezielte Reaktionen mit unverbrannten Kohlenwasserstoffen zu Stickstoff reduziert werden, d.h. daß dadurch den NOx-Bestandteilen der Sauerstoff entzogen wird.

Der normale Betriebstemperaturbereich, innerhalb dessen derartige NOx-Speicher zuverlässig arbeiten, liegt zur Zeit bei ca. 150 °C bis 500 °C, wobei eine Erhöhung der oberen Temperatur auf z.B. 700 °C durch neue Beschichtungen angestrebt werden. Oberhalb eine Maximaltemperatur von zur Zeit 800 °C werden NOx-Speicher geschädigt, so daß solche Temperaturen in jedem Falle vermieden werden müssen. Derartige NOx-Speicher sind im Abgassystem in der Regel hinter einem ersten Katalysator angeordnet. Die im ersten Katalysator ablaufende Reaktion insbesondere der Kohlenwasserstoffe mit Sauerstoff ist exotherm, so daß bei der im Katalysator stattfindenden Reinigung des Abgases dem Abgas ein Wärmestrom zugeführt wird. Da der NOx-Speicher erst bei einer Temperatur von ca. 150°C seine minimale Betriebstemperatur erreicht, ist es wünschenswert, vor allen Dingen im Hinblick auf das Kaltstartverhalten einer derartigen Abgasreinigungsanlage, den NOx-Speicher so dicht wie möglich hinter dem ersten Katalysator anzuordnen. Im Vollastbetrieb der Verbrennungskraftmaschine werden bei der im ersten Katalysator stattfindenden exothermen Reaktion Abgastemperaturen nach dem Katalysator erreicht, welche im Bereich von oder über 1.000°C liegen können. Bei diesen Vollastbedingungen ist es daher wünschenswert, den NOx-Speicher möglichst weit hinter dem ersten Katalysator anzuordnen, um zu gewährleisten, daß die Temperatur des NOx-Speichers auch unter diesen Vollastbedingungen nicht über ca. 800°C steigt. Beide Bedingungen widersprechen sich.

Es ist daher die Aufgabe der vorliegenden Erfindung, ein Verfahren bzw. eine Vorrichtung zu schaffen, welche insbesondere bei Diesel- und Magermotoren im Abgas vorhandene Stoffe wie unverbrannte Kohlenwasserstoffe, Kohlenmonoxid und Stickoxide während aller Lastbedingungen der Verbrennungskrafmaschine möglichst weitgehend entfernen, eine thermisch bedingte Schädigung eines im Abgassystem angeordneten NOx-Speichers vermeiden und eine rasche Betriebsbereitschaft nach Kaltstart gewährleisten.

Diese Aufgabe wird durch ein Verfahren mit den Merkmalen gemäß Anspruch 1 sowie durch eine Abgaskatalysatoranlage mit den Merkmalen gemäß Anspruch 10 gelöst. Zweckmäßige Weiterbildungen sind in den jeweiligen abhängigen Ansprüchen angegeben.

Das erfindungsgemäße Verfahren dient dem Reinigen eines Abgasstromes einer Verbrennungskraftmaschine. Erfindungsgemäß wird bei dem Verfahren aus dem Abgasstrom vor einem NOx-Speicher, welcher auch als NOx-Adsorber bezeichnet wird, ein Wärmestrom mittels eines Wärmeübertragers in Abhängigkeit vom Betriebszustand von der Verbrennungskraftmaschine abgeführt. Der Wärmeübertrager ist vor allen Dingen während der Kaltstartphase nicht in Betrieb um ein rasches Erreichen der Betriebstemperatur des NOx-Speichers in Höhe von mindestens ca. 150°C zu unterstützen. Je stärker bei ansteigender Last der Verbrennungskraftmaschine die exotherme Reaktion des im Abgasstrang angeordneten ersten Katalysators wirksam wird, desto stärker wird die Kühlleistung des zum Abführen des Wärmestroms erforderlichen Wärmeübertragers vor dem NOx-Speicher, so daß zuverlässig während des gesamten Betriebs der Verbrennungskraftmaschine gewährleistet wird, daß die Temperatur des NOx-Speichers 800°C nicht übersteigt und sich in einem vorgebbaren Temperaturbereich befindet, wobei der vorgebbare Bereich der Temperatur des Nox-Speichers durch eine untere Temperatur Non etwa 150°C und eine obere Temperatur Non 700 °C, vorzeigsweise 500°C, gebildet ist. Das erfindungsgemäße Verfahren zum Reinigen eines Abgasstromes einer Verbrennungskraftmaschine dient somit der Betriebssicherheit oder auch der Erhöhung der Lebensdauer des NOx-Speichers. Damit wird über den gesamten Lastbereich der Verbrennungskraftmaschine ein zuverlässiges Reinigen des Abgasstromes realisiert. Generell kann der Wärmeübertrager so gestaltet sein, daß er allein aufgrund seiner Bauart bei niedrigen Temperaturen wenig Wärme abführt und bei hohen Temperaturen viel Wärme (z.B. eine im wesentlichen Wärmestrahlung basierende Wärmeabfuhr). Möglich ist aber auch alternativ oder additiv, die Wärmeabfuhr durch zusätzliche Maßnahmen zu steuern oder zu regeln.

Gemäß einem bevorzugten Ausführungsbeispiel der Erfindung wird aus dem Abgasstrom vor oder nach einem ersten Katalysator zumindest ein Teil der im Abgasstrom enthaltenen Wärmeenergie als Wärmestrom abgeführt. Der Anteil der Energie, welcher als Wärmestrom vor dem NOx-Speicher abgeführt wird, richtet sich dabei nach den Temperaturgrenzen von ca. 150°C bis 500 °C der üblichen Funktion bzw. der maximalen Temperatur von 800°C des NOx-Speichers.

Gemäß einem weiteren bevorzugten Beispiel wird der Abgasstrom zweistufig abgeführt. Das zweistufige Abführen des Wärmestromes kann dabei durch zwei hintereinander vor dem NOx-Speicher angeordnete Wärmeübertrager oder durch jeweils einen Wärmeübertrager vor dem ersten Katalysator und zwischen dem ersten Katalysator und dem NOx-Speicher erfolgen. Insbesondere bei Abführen eines Wärmestroms unmittelbar hinter der Verbrennungskraftmaschine kann insbesondere bei hoher Last der Verbrennungskraftmaschine die Austrittstemperatur des Abgases auch hinter dem ersten Katalysator, welcher vor dem NOx-Speicher angeordnet ist, zielgerichtet abgesenkt werden.

Gemäß einem weiteren Ausführungsbeispiel der Erfindung werden im NOx-Speicher sowohl NOx adsorbiert, als auch eine katalytische Oxidation durchgeführt. Es ist jedoch auch möglich, daß im NOx-Speicher zunächst lediglich NOx adsorbiert wird und die beispielsweise zur Regenerierung des NOx-Speichers erforderlichen, unter Umständen zusätzlich in den Abgasstrang eingebrachten unverbrannten Kohlenwasserstoffe außerhalb stromabwärts von dem NOx-Speicher in einem zweiten Katalysator oxidiert werden.

Vorzugsweise liegt der durch den Wärmeübertrager abzuführende Wärmestrom im Bereich von 5 kW bis 50 kW.

Bei einer Verbrennungskraftmaschine mit einem Abgasturbolader wird im allgemeinen ohnehin überschüssige Luft aus dem Turbolader abgeblasen.

Daher kann diese Luft besonders vorteilhaft zur Zwangskühlung des Abgasstranges eingesetzt werden.

Gemäß einem weiteren Ausführungsbeispiel wird der Wärmestrom in Abhängigkeit von der Last der Verbrennungskraftmaschine geregelt abgeführt. Als Regelgröße dient dabei der Temperaturbereich des NOx-Speichers, in welchem dieser nicht nur zuverlässig NOx adsorbiert sondern auch schadensfrei arbeitet, d.h. thermisch nicht überlastet wird. Die Regelung der abzuführenden Wärmemenge im Betriebstemperaturbereich des NOx-Speichers von ca. 150°C bis ca. 500°C kann dabei in an sich bekannter Weise durch Ermittlung der jeweiligen Betriebstemperatur mittels entsprechender Thermoelemente geregelt werden, auf deren Basis z. B. die Menge an Kühlmittel geregelt wird, mittels welchem der Wärmestrom abgeführt wird. In jedem Fall soll die Überschreitung der Maximaltemperatur von 800 °C durch Erhöhung der Wärmeabfuhr vermieden werden.

Weiterhin ist es vorteilhaft, die Verbrennungskraftmaschine beim Kaltstart so lange bei einem Luft-Kraftstoff-Verhältnis von Lamda ≤ 1 zu betrieben bis der NOx-Speicher seine minimale Betriebstemperatur von ca. 150°C erreicht hat. Indem nämlich die Verbrennungskraftmaschine im fetten, zumindest jedoch im stöchiometrischen Betriebsbereich betrieben wird, werden im Abgas ausreichend unverbrannte Kohlenwasserstoffe vorhanden sein, welche der raschen Erhöhung der Betriebstemperatur des dem NOx-Speicher vorgeschalteten ersten Katalysators dienen. Durch das rasche Hochfahren der Betriebstemperatur des ersten Katalysators wird wiederum die Betriebstemperatur des NOx-Speichers von zumindest ca. 150°C relativ rasch erreicht. Vorzugsweise speichert der NOx-Speicher NOx und oxidiert unverbrannte Kohlenwasserstoffe.

Gemäß einem zweiten Aspekt der Erfindung weist die Abgaskatalysatoranlage zur Durchführung des Verfahrens, welche insbesondere für Diesel- oder Magermotoren eingesetzt wird, zumindest jeweils einen in einem Abgasstrang angeordneten ersten Katalysator und einen NOx-Speicher auf. Gemäß der Erfindung ist vor dem NOx-Speicher zumindest ein Wärmeübertrager im Abgasstrang angeordnet, wobei mittels des Wärmeübertragers ein Wärmestrom in Abhängigkeit von dem jeweiligen Betriebszustand der Verbrennungskraftmaschine abgeführt wird.

Vorzugsweise sind der NOx-Speicher zwischen einem ersten Katalysator und einem zweiten Katalysator und der Wärmeübertrager zwischen dem ersten Katalysator und dem NOx-Speicher angeordnet. Mittels eines zwischen dem ersten Katalysator und dem NOx-Speicher angeordneten Wärmeübertragers kann insbesondere vermieden werden, daß der NOx-Speicher eine über die Grenztemperatur von ca. 800°C hinausgehende thermische Belastung erfährt.

Gemäß einem weiteren Ausführungsbeispiel ist zwischen der Verbrennungskraftmaschine und dem ersten Katalysator ein zusätzlicher Wärmeübertrager angedordnet. Das Abführen eines Wärmestroms aus dem Abgassystem vor dem NOx-Speicher kann damit flexibler durchgeführt werden. Dadurch wird eine zweistufige Wärmeabfuhr realisiert, wenn sowohl zwischen der Verbrennungskraftmaschine und dem Katalysator als auch zwischen dem Katalysator und dem NOx-Speicher jeweils ein Wärmeübertrager angeordnet ist. Die Flexibilität ist etwas geringer, wenn lediglich ein Wärmeübertrager vor dem NOx-Speicher zwischen der Verbrennungskraftmaschine und dem Katalysator angeordnet ist. In jedem Falle einer solchen Konfiguration kann die Temperatur des Katalysators jedoch so reduziert werden, daß der NOx-Speicher thermisch nicht überlastet wird, d.h. seine Temperatur unterhalb von 800°C gehalten wird. Dabei können jedoch unter Umständen, insbesondere bei höherer Last der Verbrennungskraftmaschine, nicht mehr alle unverbrannten Kohlenwasserstoffe ausreichend oxidiert werden, so daß es erforderlich sein kann, einen entsprechend wirksamen weiteren Dreiwege-Katalysator in Strömungsrichtung hinter dem NOx-Speicher vorzusehen.

Gemäß noch einem weiteren Ausführungsbeispiel sind sowohl der ersten Katalysator als auch der zweite Katalysator jeweils als Dreiwege-Katalysatoren ausgebildet. Gemäß einem bevorzugten Ausführungsbeispiel ist es jedoch auch möglich, daß der NOx-Speicher und der zweite Katalysator in einer Einheit integriert sind. Dies ist beispielsweise dadurch realisierbar, daß der NOx-Speicher eine Dreiwege-Beschichtung aufweist. In einem solchen Fall adsorbiert der NOx-Speicher einerseits NOx und wirkt andererseits als Oxidationskatalysator, wobei adsorbiertes NOx direkt mit Kohlenwasserstoffen umgesetzt wird.

Gemäß einem weiteren Ausführungsbeispiel liegt die Kühlleistung der im Abgasstrang vorgesehenen Wärmeübertrager im Bereich von 5 kW bis 50 kW. Um vor allen Dingen höhere Kühlleistungen zu erreichen, sind hocheffektive Wärmeübertrager erforderlich. Beispielsweise ist gemäß einem weiteren Ausführungsbeispiel der Erfindung der Wärmeübertrager als Gegenstromwärmeübertrager ausgebildet. Vorzugsweise ist dieser Gegenstromwärmeübertrager als doppelwandiges Rohr oder als Rippenrohr ausgebildet. In seinem Innern ist er von Abgas durchströmt, und in der Hülle, welche durch die Doppelwandstruktur gebildet ist, strömt entgegen der Strömungsrichtung des Abgases das Kühlmittel. Vorzugsweise ist das Kühlmittel Wasser oder Luft, welches als Zwangsströmung durch den Wärmeübertrager strömt. Es sei aber darauf hingewiesen, daß auch schon einfache Rippenrohre zwischen den einzelnen Komponenten oder sogar gut im Luftstrom eines fahrenden Fahrzeuges gekühlte geeignet dimensionierte Leitungen als erfindungsgemäße Wärmeübertrager dienen können.

Besonders vorteilhaft ist es auch, abgeblasene Luft eines Abgasturboladers zur Zwangskühlung des Abgasstranges einzusetzen.

Bei typischen Anwendungen ist der NOx-Speicher durch kurzzeitige Zugaben von Kohlenwasserstoffen in das Abgas regenerierbar. Das bedeutet, daß das gespeicherte NOx durch im NOx-Speicher stattfindende Oxidation unverbrannter Kohlenwasserstoffe als Sauerstofflieferant dient und somit aus dem NOx-Speicher Stickstoff, Wasser und CO₂ austreten. Nachdem auf diese Weise das NOx aus dem NOx-Speicher "ausgetrieben" worden ist, weist der NOx-Speicher wieder seine ursprüngliche Adsorbtionskapazität für im Abgas von der Verbrennungskraftmaschine zugeführtes NOx auf. Damit eine zur Regeneration vorgesehene Menge an Kohlenwasserstoffen auch den NOx-Speicher erreicht ist es günstig, wenn der erste Katalysator nur eine geringe Speicherfähigkeit für Sauerstoff aufweist, damit nicht schon dort die Kohlenwasserstoffe oxidiert und damit quasi verschwendet werden.

Weitere Vorteile, Merkmale und Anwendungsmöglichkeiten der vorliegenden Erfindung werden nun anhand von Ausführungsbeispielen unter Bezugnahme auf die Zeichnungen detailliert erläutert, wobei:
- Fig. 1: ein erstes Ausführungsbeispiel einer Abgasreinigungsanlage gemäß der Erfindung zeigt; und
- Fig.2: ein zweites Ausführungsbeispiel einer Abgasreinigungsanlage gemäß der Erfindung zeigt.

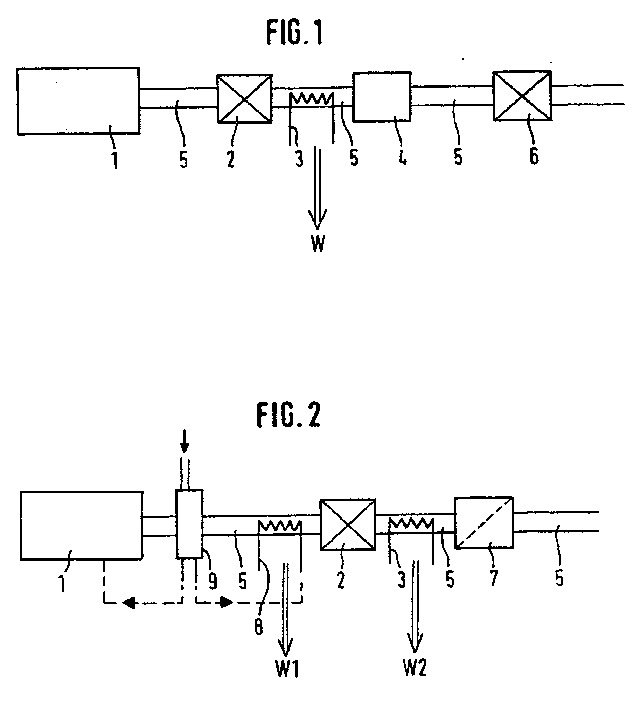

In Figur 1 ist in prinzipieller Darstellung eine Abgasreinigungsanlage gemäß der Erfindung dargestellt. Von der Verbrennungskraftmaschine 1 gelangt das Abgas in einen Abgasstrang 5, in welcher ein ersten Katalysator 2 und ein zweiter Katalysator 6 angeordnet sind. Zwischen beiden Katalysatoren 2, 6 ist ein NOx-Speicher 4 angeordnet. Zwischen dem ersten Katalysator 2 und dem NOx-Speicher 4 ist ein Wärmeübertrager 3 im Abgasstrang 5 angeordnet. Bei dem von der Verbrennungskraftmaschine 1 über den Abgasstrang 5 zu dem ersten Katalysator 2 gelangenden Abgas findet, nachdem der ersten Katalysator 2 seine Betriebstemperatur erreicht hat, was beispielsweise durch eine zusätzlich angebrachte (nicht dargestellte) Heizeinrichtung erfolgen kann, in einer exothermen Reaktion die Oxidation unverbrannter Kohlenwasserstoffe sowie von Kohlenmonoxid statt. Durch die in dem ersten Katalysator 2 ablaufende exotherme Reaktion wird dem Abgastrom Energie zugeführt, so daß dessen Temperatur ansteigt. Bei hoher Last der Verbrennungskraftmaschine treten am stromabwärtigen Ausgang des ersten Katalysators 2 Betriebstemperaturen von ca. 1.000°C oder mehr auf. Da die maximale Temperatur des nach dem ersten Katalysator 2 in der Abgasleitung angeordneten NOx-Speichers 4 bei ca. 800 °C liegt und seine Funktionsfähigkeit im Bereich von ca. 150°C bis ca. 500 °C liegt, würde ein Abgasstrom mit einer derartig hohen Temperatur zu einer frühzeitigen Zerstörung des NOx-Speichers 4 bzw. zu mangelhafte Funktion führen mit der Folge, daß der Abgasstrom nicht von dem umweltschädlichen NOx befreit werden könnte. Aus diesem Grunde ist zwischen dem ersten Katalysator 2 und dem NOx-Speicher 4 ein Wärmeübertrager 3 vorgesehen, mittels welchem insbesondere bei hoher Last der Verbrennungskraftmaschine eine lastabhängige Abfuhr des Wärmestromes W realisierbar ist. Grundsätzlich kann ein solcher Wärmeübertrager auch schon vor dem ersten Katalysator 2 liegen, sofern dies für das Kaltstartverhalten keine Nachteile bringt.

Je nach im ersten Katalysator 2 durch die exotherme Reaktion freigesetzter und im Abgasstrom enthaltener Wärmeenergie und damit je nach Temperatur des den ersten Katalysator 2 verlassenden Abgasstromes erfolgt eine geregelte Abfuhr des Wärmestromes W, damit gewährleistet ist, daß die Temperatur des NOx-Speichers im gewünschten Bereich bleibt. Die aus dem Abgasstrom entnommene Wärmeenergie kann im Fahrzeug für Heizzwecke oder ähnliches eingesetzt werden. Da bei entsprechend hohen Betriebstemperaturen der erste Katalysator 2 bereits mit einem relativ hohen Prozentsatz die im Abgasstrom enthaltenen unverbrannten Kohlenwasserstoffe sowie das darin enthaltene Kohlenmonoxid oxidiert, liegen in der Regel nicht mehr ausreichende Mengen an unverbrannten Kohlenwasserstoffen vor zur Reaktion mit dem in dem NOx-Speicher 4 gespeicherten NOx. Daher ist es, und zwar je nach Betriebsbedingungen, erforderlich, in Intervallen zusätzlich unverbrannte Kohlenwasserstoffe in den Abgasstrang 5 vor dem NOx-Speicher 4 einzuspritzen. Um zu gewährleisten, daß bei allen Betriebsbedingungen eine möglichst vollständige Reinigung des Abgases erfolgt, ist hinter dem NOx-Speicher 4 noch ein zweiter Katalysator 6 vorgesehen, welcher auch die zusätzlich eingebrachten unverbrannten Kohlenwasserstoffe oxidiert und damit ein im wesentlichen gereinigtes Abgas liefert.

In Figur 2 ist ein weiteres Ausführungsbeispiel einer Abgaskatalysatoranlage gemäß der Erfindung dargestellt. Bei dieser Abgaskatalysatoranlage wird der Abgasstrom von der Verbrennungkraftmaschine 1 in die Abgasleitung 5 geleitet, in welcher zwei Wärmeübertrager 3, 8, ein erster Katalysator 2 und ein mit einer Dreiwege-Katalysator-Beschichtung versehener NOx-Speicher 7 angeordnet sind. Entsprechend dem Ausführungsbeispiel von Figur 1 ist wiederum ein erster Wärmeübertrager 3 zwischen dem Katalysator 2 und dem NOx-Speicher 7 angeordnet. Mit diesem Wärmeübertrager 3 ist es möglich, entsprechend der jeweiligen Betriebslast bzw. dem jeweiligen Betriebszustand der Verbrennungskraftmaschine 1 einen definierten Wärmestrom W2 aus dem Abgasstrom abzuführen. Zusätzlich ist zwischen der Verbrennungskraftmaschine 1 und dem Katalysator 2 ein weiterer Wärmeübertrager 8 vorgesehen, mittels welchem ein zusätzlicher Wärmestrom W1 aus dem Abgasstrom abführbar ist. Das führt jedoch dazu, das die Eingangstemperatur des Katalysators 2 zurückgeht, wodurch ggf. auch die dort ablaufende exotherme Reaktion verlangsamt wird. Dadurch ist dessen Temperatur am Austritt aus dem Katalysator 2 geringer als im Fall des Ausführungsbeispiel gemäß Figur 1. Bei einem Betriebsfall, bei welchem beide Wärmeübertrager 3, 8 in Betrieb sind, ist daher der im Wärmeübertrager 3 abzuführende Wärmestrom W2 geringer als bei dem Ausführungsbeispiel gemäß Figur 1. In jedem Fall dienen die Wärmeübertrager 3, 8 der Reduzierung der maximalen Temperatur des Abgasstromes beim Eintritt in den NOx-Speicher 7, um zu gewährleisten, daß dessen vorgebbarer Temperaturbereich eingehalten wird.

Da bei reduzierter exothermer Reaktion im Katalysator 2 unverbrannte Kohlenwasserstoffe unter Umständen nicht vollständig mit im NOx-Speicher 7 gespeichertem NOx reagieren und den NOx-Speicher 7 unverbrannt verlassen können, ist der NOx-Speicher 7 als eine integrale Einheit mit einer Dreiwege-Katalysator-Beschichtung versehen. Diese Dreiwege-Katalysator-Beschichtung wirkt wie ein Hauptkatalysator 6 gemäß Figur 1, jedoch mit dem Vorteil, daß weniger separate Teile der Abgasreinigungsanlage erforderlich sind.

Bei Vorsehen von zwei Wärmeübertragern 3, 8 ist die Flexibilität bzgl. der Anpassung des abzuführenden Wärmestroms entsprechend des Betriebszustandes der Verbrennungskraftmaschine im Vergleich zu einem Ausführungsbeispiel mit nur einem Wärmeübertrager 3 gemäß Figur 1 deutlich verbessert.

Wie in Fig. 2 angedeutet, kann der Abgasstrang 5 auch einen Abgasturbolader 9 hinter der Verbrennungskraftmaschine 1 enthalten. Das Abgas treibt diesen Turbolader 9 an, so daß dort Umgebungsluft komprimiert und zur Verbrennungskraftmaschine 1 geführt wird. Überschüssige Luft wird dabei üblicherweise abgeblasen, so daß diese erfindungsgemäß vorteilhafterweise zur Zwangskühlung des Abgasstranges 5, z. B. im Gegenstrom im zusätzlichen Wärmetauscher 8 genutzt werden kann.

Insgesamt erlaubt die vorliegende Erfindung eine einfache und effektive Einhaltung eines vorgebbaren Temperaturbereichs im NOx-Speicher einer Abgasanlage, wodurch die Qualität der Abgasreinigung unter unterschiedlichen Betreibsbedingungen sichergestellt werden kann.

### Bezugszeichenliste

- 1: Verbrennungskraftmaschine
- 2: Erster Katalysator
- 3: Wärmeübertrager
- 4: NOx-Speicher
- 5: Abgasstrang
- 6: Zweiter Katalysator
- 7: NOx-Speicher mit katalytisch aktiver Beschichtung
- 8: Wärmeübertrager
- 9: Abgasturbolader

- W: Wärmestrom
- W: 1 erster Wärmestrom
- W2: zweiter Wäremestrom

## Patentansprüche

1. Verfahren zur Regelung des Temperaturbereiches eines NOx-Speichers (4; 7) zum Reinigen eines in einem Abgasstrang (5) geführten Abgasstromes einer Verbrennungskraftmaschine (1), bei welchem aus dem Abgasstrom vor dem NOx-Speicher (4) in Abhängigkeit vom Betriebszustand der Verbrennungskraftmaschine (1) ein solcher Wärmestrom (W; W1, W2) abgeführt wird, daß eine maximale Belastungstemperatur des NOx-Speichers (4; 7) sicher nicht überschritten und ein vorgebbarer Temperaturbereich im wesentlichen eingehalten wird, wobei der vorgebbare Bereich der Temperatur des NOx-Speichers (4;7) durch eine untere Temperatur von etwa 150 °C und eine obere Temperatur von 700 °C, vorzugsweise 500 °C, gebildet ist.

2. Verfahren nach Anspruch 1, bei welchem aus dem Abgasstrom vor und/oder nach einem ersten Katalysator (2) zumindest ein Teil der im Abgas enthaltenen Wärmeenergie als Wärmestrom (W) abgeführt wird.

3. Verfahren nach Anspruch 1 oder 2, bei welchem aus dem Abgasstrom der Wärmestrom (W1,W2) zweistufig abgeführt wird.

4. Verfahren nach Anspruch 3, bei welchem aus dem Abgasstrom vor und nach dem ersten Katalysator (2) der Wärmestrom (W1, W2) abgeführt wird.

5. Verfahren nach einem der vorhergehenden Ansprüche, bei welchem der NOx-Speicher (4; 7) NOx speichert und als Oxidationkatalysator wirkt.

6. Verfahren nach einem der Ansprüche 1 bis 5, bei welchem der abgeführte Wärmestrom (W; W1, W2) 5 kW bis 50 kW beträgt.

7. Verfahren nach einem der vorhergehenden Ansprüche, bei welchem abgeblasene Luft eines der Verbrennungskraftmaschine (1) zugeordneten Abgasturboladers (9) zur Zwangskühlung des Abgasstranges (5) vor dem NOx-Speicher genutzt wird.

8. Verfahren nach einem der vorhergehenden Ansprüche, bei welchem der - Wärmestrom (W; W1, W2) geregelt abgeführt wird, wobei als Regelgröße in Abhängigkeit von der Last der Verbrennungskraftmaschine (1) ein vorgebbarer Bereich der Temperatur des NOx-Speichers (4; 7) verwendet wird.

9. Verfahren nach einem der Ansprüche 1 bis 8, bei welchem die Verbrennungskraftmaschine (1) bei einem Luft-Kraftstoff-Verhältnis Lamda ≤ 1 betrieben wird, bis der NOx-Speicher (4; 7) seine minimale Betriebstemperatur von etwa 150 °C erreicht hat.

10. Abgaskatalysatoranlage zur Durchführung des Verfahrens nach einem der Ansprüche 1 bis 9, insbesondere für Diesel- oder Magermotoren, mit zumindest jeweils einem in einem Abgasstrang (5) angeordneten ersten Katalysator (2) und NOx-Speicher (4; 7),
**dadurch gekennzeichnet, dass** vor dem NOx-Speicher (4; 7) zumindest ein Wärmeübertrager (3; 8) zur Abführung des Wärmestroms (W; W1, W2) in Abhängigkeit von dem jeweiligen Betriebszustand der Verbrennungskraftmaschine (1) im Abgasstrang angeordnet ist.

11. Abgaskatalysatoranlage nach Anspruch 10, **dadurch gekennzeichnet, daß** der NOx-Speicher (4; 7) zwischen einem ersten Katalysator (2) und einem zweiten Katalysator (6) und der Wärmeübertrager (3) vor dem ersten Katalysator (2) oder zwischen dem ersten Katalysator (2) und dem NOx-Speicher (4; 7) angeordnet ist.

12. Abgaskatalysatoranlage nach Anspruch 11, **dadurch gekennzeichnet, daß** ein zusätzlicher Wärmeübertrager (8) zwischen der Verbrennungskraftmaschine (1) und dem ersten Katalysator (2) angeordnet ist.

13. Abgaskatalysatoranlage nach einem der Ansprüche 10 bis 12, **dadurch gekennzeichnet, daß** der erste Katalysator (2) und der zweite Katalysator (6) jeweils als Drei-Wege-Katalysatoren ausgebildet sind, wobei der erste Katalysator (2) vorzugsweise eine sehr geringe Sauerstoffspeicherfähigkeit aufweist.

14. Abgaskatalysatoranlage nach einem der Ansprüche 11 bis 13, **dadurch gekennzeichnet, daß** der NOx-Speicher (4; 7) und der zweite Katalysator (6) in einer Einheit integriert sind.

15. Abgaskatalysatoranlage nach einem der Ansprüche 10 bis 14, **dadurch gekennzeichnet, daß** der NOx-Speicher (4; 7) eine katalytische Drei-Wege-Beschichtung aufweist.

16. Abgaskatalysatoranlage nach einem der Ansprüche 10 bis 15, **dadurch gekennzeichnet, daß** der Wärmeübertrager (3; 8) eine Kühlleistung von 5 kW bis 50 kW aufweist.

17. Abgaskatalysatoranlage nach einem der Ansprüche 10 bis 16, **dadurch gekennzeichnet, daß** der Wärmeübertrager (3; 8) als Gegenstromwärmeübertrager ausgebildet ist.

18. Abgaskatalysatoranlage nach Anspruch 17, **dadurch gekennzeichnet, daß** der Wärmeübertrager (3; 8) als doppelwandiges Rohr ausgebildet ist, welches in seinem Inneren von Abgas und in der durch die Doppelwand gebildeten Hülle von Kühlmittel durchströmt ist.

19. Abgaskatalysatoranlage nach einem der Ansprüche 10 bis 17, **dadurch gekennzeichnet, daß** der Wärmeübertrager (3; 8) ein als Rippenrohr ausgebildetes Stück des Abgasstranges (5) ist, welches von Kühlmittel umströmt ist.

20. Abgaskatalysatoranlage nach Anspruch 18 oder 19, **dadurch gekennzeichnet, daß** das Kühlmittel Wasser oder Luft ist und als Zwangsströmung durch den Wärmeübertrager (3; 8) strömt.

21. Abgaskatalysatoranlage nach Anspruch 20, **dadurch gekennzeichnet, daß** abgeblasene Luft eines der Verbrennungskraftmaschine (1) zugeordneten Abgasturboladers (9) durch den Wärmeübertrager (3; 8) strömt.

## Claims

1. A method for regulating the temperature range of an NOₓ store (4; 7) for purifying an exhaust gas stream, conducted in an exhaust tract (5), of an internal combustion engine (1), in which method a heat flow (W; W1, W2) discharged from the exhaust gas stream upstream of the NOₓ store (4) as function of the operating state of the internal combustion engine (1) is such that a maximum load temperature of the NOₓ store (4; 7) is reliably not exceeded and a predeterminable temperature range is essentially maintained wherein said predeterminable range of the temperature of the NOₓ store (4; 7) is formed by a lower temperature of about 150 °C and an upper temperature of 700 °C, preferably 500 °C.

2. A method as claimed in claim 1, in which at least part of the heat energy contained in the exhaust gas is discharged as a heat flow (W) from the exhaust gas stream upstream and/or downstream of a first catalyst (2).

3. The method as claimed in claim 1 or 2, in which the heat flow (W1, W2) is discharged from the exhaust gas stream in two stages.

4. The method as claimed in claim 3, in which the heat flow (W1, W2) is discharged from the exhaust gas stream upstream and downstream of the first catalyst (2).

5. The method as claimed in one of the proceeding claims, in which the NOₓ store (4; 7) stores NOₓ and acts as an oxidation catalyst.

6. The method as claimed in one of claims 1 to 5, in which the discharged heat flow (W; W1, W2) is 5 kW to 50 kW.

7. The method as claimed in one of the preceding claims, in which blown-off air from an exhaust gas turbo charger (9) assigned to the internal combustion engine (1) is utilized for the forced cooling of the exhaust tract (5) upstream of the NOₓ store.

8. The method as claimed in one of the.preceding claims, in which the heat flow (W; W1, W2) is discharged in an regulated manner, the regulating variable used being a predeterminable range of the temperature of the NOₓ store (4; 7) as a function of the load of the internal combustion engine (1).

9. The method as claimed in one of claims 1 to 8, in which the internal combustion engine (1) is operated with an air/fuel ratio of Lambda ≤ 1, until the NOₓ store (4; 7) has reached its minimum operating temperature of about 150 °C.

10. An exhaust gas catalyst system for carrying out the method as claimed in one of claims 1 to 9, in particular for a diesel or lean-burn engines, in each case with at least one first catalyst (2) and NOₓ store (4; 7) arranged in an exhaust tract (5), **characterized in that** at least one heat exchanger (3; 8) is arranged upstream of the NOₓ store (4; 7) in the exhaust tract, said heat exchanger discharges the heat flow (W; W1, W2) as a function of the respective operating state of the internal combustion engine (1).

11. The exhaust gas catalyst system as claimed in claim 10, **characterized in that** the NOₓ store (4; 7) is arranged between a first catalyst (2) and a second catalyst (6) and the heat exchanger (3) is arranged upstream of the first catalyst (2) or between the first catalyst (2) and the NOₓ store (4; 7).

12. The exhaust gas catalyst system as claimed in claim 11, **characterized in that** an additional heat exchanger (8) is arranged between the internal combustion engine (1) and said first catalyst (2).

13. The exhaust gas catalyst system as claimed in one of claims 10 to 12, **characterized in that** the first catalyst (2) and the second catalyst (6) are designed in each case as three-way catalysts, the first catalyst (2) preferably having a very low oxygen storage capacity.

14. The exhaust gas system as claimed in one of claims 11 to 13, **characterized in that** the NOₓ store (4; 7) and the second catalyst (6) are integrated in one unit.

15. The exhaust gas catalyst system as claimed in one of claims 10 to 14, **characterized in that** the NOₓ store (4; 7) has a catalytic three-way coating.

16. The exhaust gas catalyst system as claimed in one of claims 10 to 15, **characterized in that** the heat exchanger (3; 8) has a cooling capacity of 5 kW to 50 kW.

17. The exhaust gas catalyst system as claimed in one of claims 10 to 16, **characterized in that** the heat exchanger (3; 8) is designed as a countercurrent heat exchanger.

18. The exhaust gas catalyst system as claimed in claim 17, **characterized in that** the heat exchanger (3; 8) is designed as a double-walled tube, through which exhaust gas flows in its interior and through which coolant flows in the casing formed by the double-wall.

19. The exhaust gas catalyst system as claimed in one of claims 10 to 17, **characterized in that** the heat exchanger (3; 8) is a section, designed as a ribbed tube, of the exhaust tract (5), coolant flowing around said section.

20. The exhaust gas catalyst system as claimed in claim 18 or 19, **characterized in that** the coolant is water or air and flows as forced flow through the heat exchanger (3; 8).

21. The exhaust gas catalyst system as claimed in claim 20, **characterized in that** a blown-off air from an exhaust gas turbo charger (9) assigned to the internal combustion engine (1) flows through the heat exchanger (3; 8).

## Revendications

1. Procédé de régulation d'une plage de température d'un accumulateur de NOₓ (4 ; 7) pour l'épuration d'un flux de gaz d'échappement d'une machine à combustion interne (1), lequel flux de gaz d'échappement est guidé dans un brin de gaz d'échappement (5), procédé, dans lequel un tel flux de chaleur (W ; W1, W2) est évacué du flux de gaz d'échappement en amont de l'accumulateur de NOₓ (4) en fonction de l'état d'opération de la machine à combustion interne (1), qu'une température maximale de charge de l'accumulateur de NOₓ (4 ; 7) n'est sûrement pas dépassée et une plage de température prédéterminable est maintenue sensiblement, la plage prédéterminable de température de l'accumulateur de NOₓ (4 ; 7) étant formée par une température inférieure d'environ 150°C et par une température supérieure de 700°C, de préférence 500°C.

2. Procédé selon la revendication 1, dans lequel au moins une partie de l'énergie thermique contenue dans le gaz d'échappement est évacuée comme flux thermique (W) du flux de gaz d'échappement en amont et/ou en aval d'un premier catalyseur (2).

3. Procédé selon la revendication 1 ou 2, dans lequel le flux thermique (W1, W2) est évacué en deux étapes du flux de gaz d'échappement.

4. Procédé selon la revendication 3, dans lequel le flux thermique (W1, W2) est évacué du flux de gaz d'échappement en amont et en aval du premier catalyseur (2).

5. Procédé selon l'une des revendications précédentes, dans lequel l'accumulateur de NOₓ (4 ; 7) accumule du NOₓ et agit comme catalyseur d'oxydation.

6. Procédé selon l'une des revendications 1 à 5, dans lequel le flux thermique (W ; W1 ; W2) évacué comporte 5 kW à 50 kW.

7. Procédé selon l'une des revendications précédentes, dans lequel de l'air lâché d'une turbosoufflante à gaz d'échappement (9) associée à la machine à combustion interne (1) est utilisé pour le refroidissement forcé du brin de gaz d'échappement (5) en amont de l'accumulateur de NOₓ.

8. Procédé selon l'une des revendications précédentes, dans lequel le flux thermique (W ; W1, W2) est évacué de manière réglée, dans quel cas une plage de température prédéterminable de l'accumulateur de NOₓ (4 ; 7) est utilisée comme paramètre de régulation en fonction de la charge de la machine à combustion interne (1).

9. Procédé selon l'une des revendications 1 à 8, dans lequel la machine à combustion interne (1) est opérée avec un rapport d'air/carburant Lamda ≤ 1, jusqu'à ce que l'accumulateur de NOₓ (4 ; 7) ait atteint sa température d'opération minimale d'environ 150°C.

10. Installation de catalyseur de gaz d'échappement pour l'exécution du procédé selon l'une des revendications 1 à 9, notamment pour moteurs diesel ou moteurs à mélange pauvre, avec au moins un premier catalyseur respectif (2) et accumulateur de NOₓ (4 ; 7) agencé dans un brin de gaz d'échappement (5), **caractérisée en ce qu'**au moins un échangeur de chaleur (3 ; 8) est agencé en amont de l'accumulateur de NOₓ (4 ; 7) dans le brin de gaz d'échappement, lequel échangeur de chaleur évacue le flux thermique (W ; W1, W2) en fonction de l'état d'opération respectif de la machine à combustion interne (1).

11. Installation de catalyseur de gaz d'échappement selon la revendication 10, **caractérisée en ce que** l'accumulateur de NOₓ (4 ; 7) est agencé entre un premier catalyseur (2) et un deuxième catalyseur (6) et l'échangeur de chaleur (3) est agencé en amont du premier catalyseur (2) ou entre le premier catalyseur (2) et l'accumulateur de NOₓ (4 ; 7).

12. Installation de catalyseur de gaz d'échappement selon la revendication 11, **caractérisée en ce qu'**un échangeur de chaleur supplémentaire (8) est agencé entre la machine à combustion interne (1) et le premier catalyseur (2).

13. Installation de catalyseur de gaz d'échappement selon l'une des revendications 10 à 12, **caractérisée en ce que** le premier catalyseur (2) et le deuxième catalyseur (6) sont réalisés respectivement comme catalyseurs à trois voies, le premier catalyseur (2) ayant de préférence une capacité d'accumulation d'oxygène très faible.

14. Installation de catalyseur de gaz d'échappement selon l'une des revendications 11 à 13, **caractérisée en ce que** l'accumulateur de NOₓ (4 : 7) et le deuxième catalyseur (6) sont intégrés dans une unité.

15. Installation de catalyseur de gaz d'échappement selon l'une des revendications 10 à 14, **caractérisée en ce que** l'accumulateur de NOₓ (4 ; 7) a un revêtement catalytique à trois voies.

16. Installation de catalyseur de gaz d'échappement selon l'une des revendications 10 à 15, **caractérisée en ce que** l'échangeur de chaleur (3 ; 8) a une capacité de refroidissement de 5 kW à 50 kW.

17. Installation de catalyseur de gaz d'échappement selon l'une des revendications 10 à 16, **caractérisée en ce que** l'échangeur de chaleur (3 ; 8) est réalisé comme échangeur de chaleur à contre-courant.

18. Installation de catalyseur de gaz d'échappement selon la revendication 17, **caractérisée en ce que** l'échangeur de chaleur (3 ; 8) est réalisé comme tube à double paroi, qui dans son intérieur est parcouru par du gaz d'échappement et parcouru par de l'agent réfrigérant dans l'enveloppe formée par la double paroi.

19. Installation de catalyseur de gaz d'échappement selon l'une des revendications 10 à 17, **caractérisée en ce que** l'échangeur de chaleur (3 ; 8) est une section réalisée en tant que tube à nervures du brin de gaz d'échappement (5), de l'agent réfrigérant coulant autour de la section.

20. Installation de catalyseur de gaz d'échappement selon la revendication 18 ou 19, **caractérisée en ce que** l'agent réfrigérant est de l'eau ou de l'air et coule comme flux forcé à travers l'échangeur de chaleur (3 ; 8).

21. Installation de catalyseur de gaz d'échappement selon la revendication 20, **caractérisée en ce que** de l'air lâché d'une turbosoufflante à gaz d'échappement (9) associée à la machine à combustion interne (1) s'écoule à travers l'échangeur de chaleur (3 ; 8).
